# EUROPEAN PATENT SPECIFICATION

(11) **EP 2 656 590 B1**
(45) Date of publication and mention of the grant of the patent: **12.11.2014**
(21) Application number: 10801731.0
(22) Date of filing: 21.12.2010
(51) Int. Cl.: H04L 29/12

(54) **DNS forwarder for multi-core platforms**
DNS-Versender für Multicore-Plattformen
Redirecteur DNS pour plateformes multicoeur

(43) Date of publication of application: 30.10.2013
(73) Proprietor: Thomson Licensing, 92130 Issy Les Moulineaux (FR)
(72) Inventor: BROERMAN, Keith, Robert, Carmel Indiana 46032 (US); WEAVER, David, John, Fishers Indiana 46038 (US)
(74) Representative: Huchet, Anne
(86) International application number: PCT/US2010/003229
(87) International publication number: WO 2012/087263

(56) References cited:
- WO-A1-02/05510
- US-A1- 2010 262 650

## Description

### Field of the Invention

The present invention generally relates to data communications, particularly to data communications over a network involving a platform with multiple processing cores.

### Background of the Invention

In a multi-core platform, such as an advanced cable gateway, one of the multiple processing cores, the "primary core," typically will have wide area network (WAN) connectivity and will implement a Dynamic Host Configuration Protocol (DHCP) client to obtain a globally routable Internet Protocol (IP) address from a remote DHCP server. The DHCP server will respond to an IP lease request from the DHCP client with a DHCP offer message that will typically contain a list of IP addresses of Domain Name System (DNS) servers that the client can use for resolving domain names (e.g., "www.technicolor.com" is resolved as IP address 157.254.235.97).

The other processing cores ("secondary cores") in such a multi-core platform may host their own operating systems with network applications (e.g., HTTP browser, stock ticker, etc.) that also require DNS resolution services. Additionally, any number of client devices such as computers, game systems, or the like, may be attached to and dependent on one or more secondary processing cores for access to the internet. Typically, these secondary cores do not have direct WAN connectivity but instead may use Internet Engineering Task Force (IETF) Class A, B, or C private networks (either physical or virtual) to communicate with the primary core and with each other. For simplicity, secondary core network interfaces typically use fixed Class A, B, or C private network addresses (e.g., 192.168.0.xxx) and do not implement local DHCP clients to obtain private IP addresses from the primary core. A limitation of using fixed private network addresses, however, is that the secondary cores cannot directly provide DNS resolver services to the network applications running on those cores and/or client devices attached thereto.

One approach to this problem is for the primary core to host a private DHCP server to serve private IP addresses to each secondary core. The private DHCP server could pass to the secondary cores, in private DHCP offers, the DNS server IP list acquired from the WAN-side DHCP server. This approach also requires each secondary core to implement a DHCP client. More limiting however, the primary core DHCP server must be able to support multiple DHCP scopes in order to allocate a known fixed IP address to each secondary core, based on, for example, the network interface identifiers--such as the Media Access Control (MAC) addresses--of the secondary cores. A drawback of this approach is that multiple-scope DHCP server capability adds significant product complexity, and as mentioned, it also requires each secondary core to implement a DHCP client, adding further complexity to the multi-core platform.

Patent application US 2010/0262650 A1 discloses a multi-core platform with a DNS service without any details concerning how the DNS resolvers are configured. A need exists, therefore, for an arrangement without the aforementioned shortcomings that allows a multi-core platform to provide DNS resolution services to network applications running on secondary cores, and/or clients of secondary cores, with no direct WAN connectivity.

### Summary of the Invention

The invention is defined by the subject-matter of independent claims 1 and 9. Methods and apparatus are disclosed for use in a multi-core platform in which secondary processor cores without direct WAN connectivity provide DNS resolver services to their network applications. In an exemplary embodiment, a primary processor core having direct WAN connectivity, includes a DNS forwarder which shares with the platform's secondary processing cores DNS server IP address information acquired from a WAN-side DHCP server. Each secondary core implements a DNS forwarder client to request DNS information from the primary core DNS forwarder, receive the information, and make it available to its operating system's DNS resolver module. Additionally, or alternatively, the primary core DNS forwarder may push updated DNS server information to each secondary core following a primary core DHCP client lease renewal.

In view of the above, and as will be apparent from the detailed description, other embodiments and features are also possible and fall within the principles of the invention.

### Brief Description of the Drawings

Some embodiments of apparatus and/or methods in accordance with embodiments of the present invention are now described, by way of example only, and with reference to the accompanying figures in which:
FIG. 1 is a block diagram showing the arrangement of an exemplary multi-core home gateway between a WAN link, such as with a service provider, and a LAN, such as a home network;
FIG. 2 is a block diagram of an exemplary embodiment of a home gateway system having multiple processing cores that intercommunicate using a physical or virtual communication data link;
FIG. 3 is a block diagram of an exemplary embodiment of a home gateway system including a primary processing core implementing a DHCP client and a DNS forwarder and a secondary processing core implementing a DNS forwarder client which interacts with the DNS forwarder in the primary core and a DNS resolver in the secondary core to provide DNS information for network applications running on the secondary core;
FIG. 4 is a flowchart of an exemplary method in a pull mode of operation in which secondary core DNS forwarder clients pull DNS server information from a primary core DNS forwarder;
FIG. 5 is a flowchart of an exemplary method in a push mode of operation in which a primary core DNS forwarder pushes DNS server information to secondary core DNS forwarder clients;
FIG. 6 is a block diagram of an exemplary embodiment of a home gateway system which is capable of supporting DNS traffic for client devices attached to a processing core; and
FIG. 7 is a block diagram of a further exemplary embodiment of a home gateway system which is capable of supporting DNS traffic for client devices attached to a processing core.

### Detailed Description

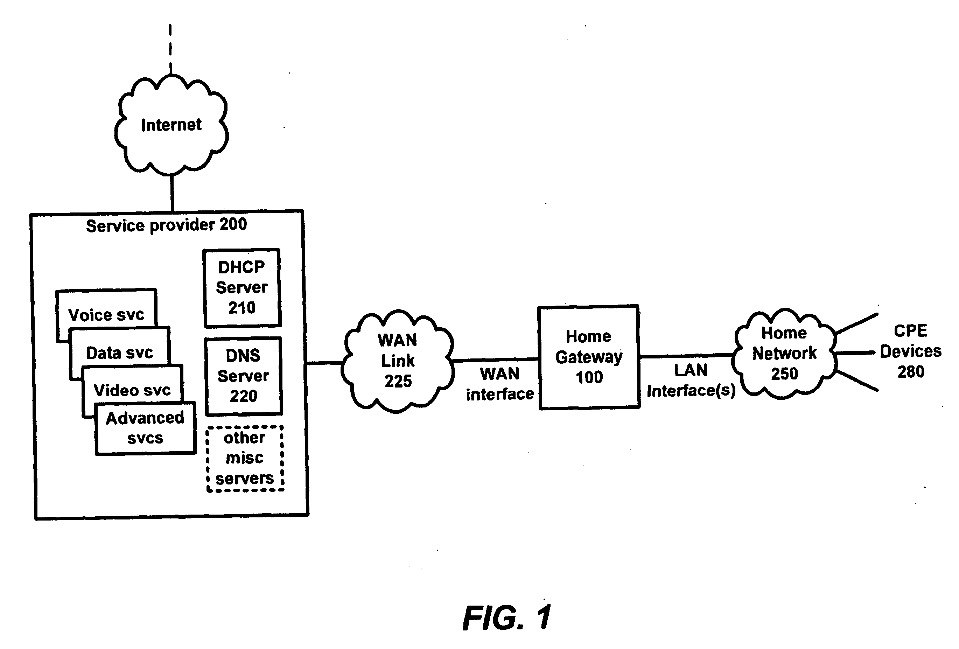

FIG. 1 is a block diagram of a typical arrangement including an exemplary home gateway 100. It is contemplated that home gateway 100 is a multi-core platform, such as an advanced cable gateway or the like. The home gateway 100 is coupled via a wide area network (WAN) link 225 such as, for example, cable, fiber, or DSL to service provider 200. Home gateway 100 is also coupled via a local area network (LAN), such as home network 250 to one or more customer premises equipment (CPE) devices 280. CPE devices 280 may include, for example, personal computers, network printers, digital set-top boxes, and/or audio/visual media servers and players, among others.

Service provider 200 provides one or more services such as voice, data, video and/or various advanced services over WAN link 225 to CPE devices 280. Service provider 200 also includes DHCP server 210 and DNS server 220, and may include other servers as well. As can be appreciated, service provider 200 may have multiple DHCP, DNS and other servers, which can be co-located or widely distributed. It is contemplated that service provider 200 operates in a conventional manner in accordance with well known protocols. In an illustrative cable application, service provider 200 may be, for example, a multiple service operator (MSO).

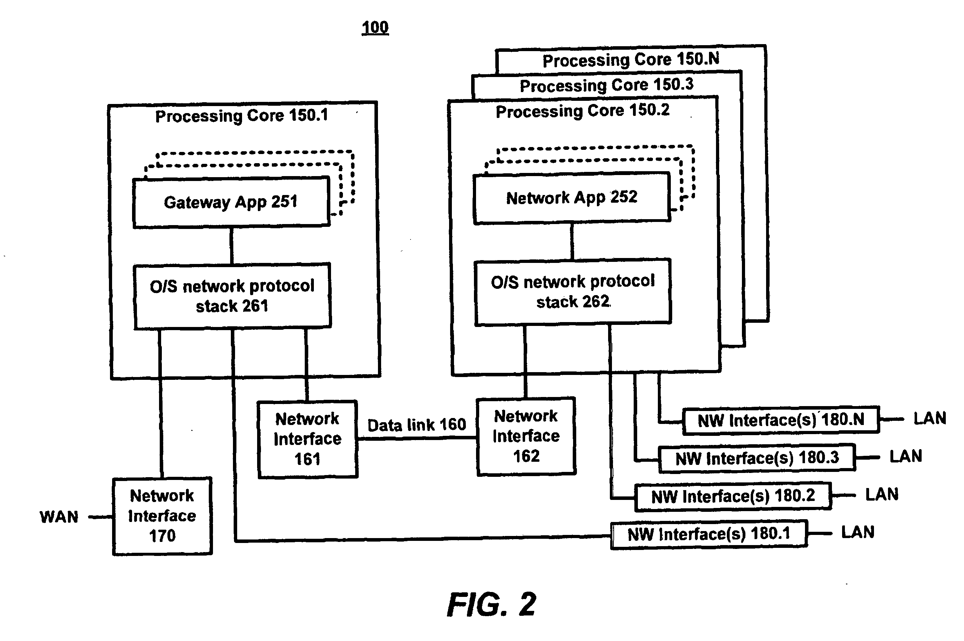

FIG. 2 is a block diagram of an exemplary embodiment of home gateway 100 having multiple processing cores 150.1-150.N (collectively referred to as 150). Processing cores 150 of home gateway 100 may be processing cores of one or more integrated multi-core processors, individual processors, or a combination thereof. Regardless of the particular implementation, it is contemplated that each processing core 150 operates independently of other processing cores 150 and is typically able to read and execute its own instructions in parallel to other processing cores 150. Moreover, each processing core 150 may host its own operating system (O/S) and is able to run multiple applications that use operating system resources. It is contemplated that processing cores 150 execute various applications for providing services to CPE devices 280 and for managing the home gateway 100, among other possibilities.

Processing cores 150 intercommunicate using a data link 160 via respective network interfaces 161, 162. Data link 160 can be implemented as a virtual communication link between virtual network interfaces 161, 162 or as a physical communication link between physical network interfaces 161, 162. Exemplary virtual data link implementations include, for example, an inter-process communication (IPC) data link, with shared memory and/or interrupts, among other possibilities. Exemplary physical data link implementations include, for example, serial or parallel data links, among other possibilities.

In the exemplary embodiment shown, one of the processing cores 150.1 acts as a "primary" core, whereas the remainder of the processing cores 150.2-150.N act as "secondary" cores. Primary processing core 150.1 has access to WAN link 225 via network interface 170, whereas secondary processing cores 150.2-150.N typically do not. Network interface 170 is typically a physical interface, such as DOCSIS, Ethernet, or MoCA, among other possibilities. Home gateway 100 also has one or more network interfaces 180.1-180.N (collectively 180) for access to a LAN or the like (e.g., home network 250). One or more processing cores 150 can use network interface(s) 180 to communicate with CPE devices 280 on home network 250. Each network interface 180 is also typically a physical interface, such as Ethernet, USB, MoCA, or WiFi, among other possibilities.

In an illustrative application such as an advanced cable gateway, primary processing core 150.1 implements a gateway application 251, among others. Gateway application 251 handles various functions including, for example: management of the WAN and LAN interfaces; packet routing or bridging between the WAN and LAN interfaces; and gateway hardware management including power and/or low power modes, status indicators, and the like. In addition, gateway application 251 also provides DHCP and DNS functions, as described in greater detail below. Each of the secondary processing cores 150.2-150.N implements one or more network applications 252 requiring DNS resolution services, such as web browsers or the like. Network applications 252 running on the processing cores may include, for example, web browsers, stock tickers, UPnP media servers/players, file servers, music clients/servers, and game servers, among others. As can be appreciated, processing cores 150 will also typically implement applications that do not require DNS resolution services.

As shown in FIG. 2, the various network applications running on the processing cores 150, including gateway application 251 on primary processing core 150.1, each sit on top of a network protocol stack 261, 262 (provided by the operating system of each core) for communicating with each other and with the WAN and LAN network interfaces 170, 180. It is contemplated that any of a variety of suitable operating systems with network capabilities and network protocol stacks can be used.

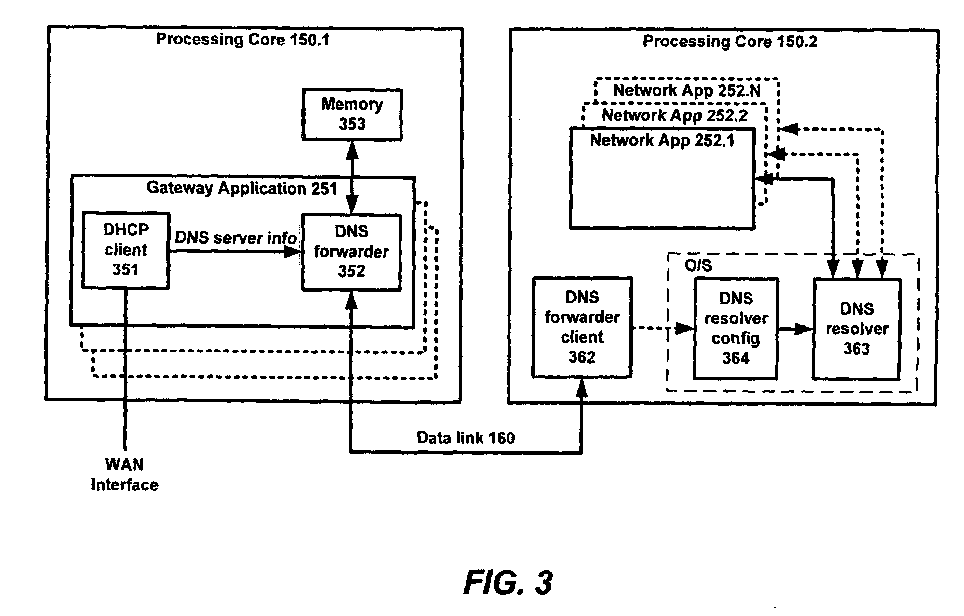

FIG. 3 shows in greater detail the implementation of DHCP and DNS functions on the processing cores 150. As shown in FIG. 3, gateway application 251 implemented on primary processing core 150.1 includes a DHCP client 351 and a DNS forwarder 352. In accordance with conventional operation, DHCP client 351 sends IP lease requests, via O/S network protocol stack 261, to a WAN-side DHCP server, such as DHCP server 210 of service provider 200 (FIG. 1), which, in turn, responds with DHCP offer messages. Each DHCP offer message contains a list of IP addresses of DNS servers (such as DNS server 220) that can be used for resolving host domain names.

In addition, each secondary processing core, such as processing core 150.2, includes a DNS forwarder client 362 which is implemented to interact with DNS forwarder 352 on primary processing core 150.1. Moreover, it is contemplated that the operating system of each secondary processing core will have, as part of its network protocol stack 262, a DNS resolver 363 for serving network applications 252.1-252.N (collectively referred to as 252) running on the processing core. The network applications 252 send DNS resolution requests to DNS resolver 363 which, as described below, obtains and responds back with the IP addresses associated with the domain names specified in the DNS resolution requests. In addition, the operating system of each secondary core includes a DNS resolver configuration module 364, via which DNS forwarder client 362 configures DNS resolver 363, as described below. For simplicity, only one secondary processing core 150.2 is depicted in FIG. 3.

In addition to network applications running on the secondary processing cores, network applications running on the primary core 150.1 may also require DNS resolution services. As can be appreciated, such DNS traffic can be handled in a conventional manner via the primary core's O/S network protocol stack 261 which would typically include a DNS resolver.

Generally, DHCP client 351 provides the DNS server IP address information acquired from a WAN-side DHCP server (210) to DNS forwarder 352, which in turn, makes the information available to the DNS forwarder clients 362 implemented on the platform's secondary processing cores 150.2-150.N. DNS forwarder client 362, in turn, installs the DNS server IP addresses into DNS resolver 363 via DNS resolver configuration module 364.

As mentioned above with reference to FIG. 2, the processing cores 150 intercommunicate using the data link 160. Traffic communicated via data link 160 includes WAN traffic to and from the secondary processing cores 150.2-150.N as well as traffic between DNS forwarder 352 on the primary core and DNS forwarder client 362 on each secondary core. As such, DNS queries from DNS resolver 363 in the secondary core protocol stack 262 flow through virtual network interfaces 162, 161, up through the primary core protocol stack 261 and then routed or bridged by the primary core protocol stack 261 back down to the WAN network interface 170 out to a WAN-side DNS server. Resolved DNS IP addresses from the WAN-side DNS server take the reverse route back to DNS resolver 363 for provision to the requesting secondary core network applications 252 or attached client devices. It is contemplated that the flows of DNS queries and the results thereof through the platform 100 entail standard operations of the operating system(s) running thereon.

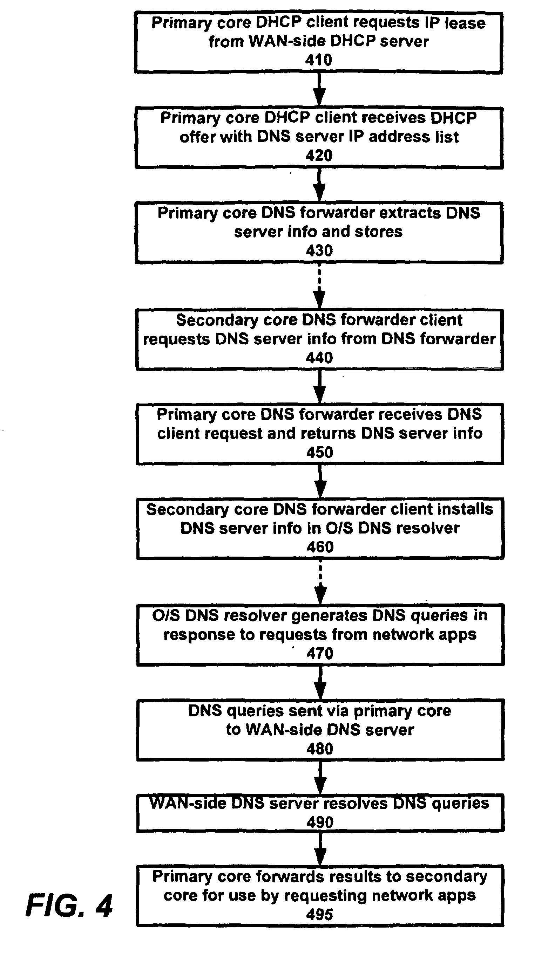

The arrangement of FIGs. 2 and 3 can operate in either a "pull" or "push" mode. An exemplary method of operation in pull mode will now be described with reference to FIGs. 3 and 4.

As shown in FIG. 4, at step 410, DHCP client 351 sends an IP lease request to a WAN-side DHCP server (210), which, in turn, responds with a DHCP offer message containing a list of IP addresses of DNS servers (such as DNS server 220) that can be used for resolving domain names. At step 420, DHCP client 351 receives the DHCP offer message with the aforementioned DNS server IP address list and provides the message to DNS forwarder 352.

At step 430, DNS forwarder 352 extracts the DNS server IP address list from the DHCP offer message and stores the list, such as in local memory 353 associated with primary processing core 150.1.

At some later time, as represented by step 440, a secondary core DNS forwarder client, such as DNS forwarder client 362 of secondary processing core 150.2, sends a request for DNS server information to DNS forwarder 352 in the primary processing core 150.1. DNS forwarder client 362 can send such a request in response to a request or an indication from a network application 252 running on secondary processing core 150.2 or a client device attached thereto that DNS resolution services will be required. DNS forwarder client 362 can also send a request for DNS server information in accordance with the expiration of a timer. Such a timer can be maintained, for example, by DNS resolver 363, and can be set to expire periodically. At step 450, DNS forwarder 352 receives the request from DNS forwarder client 362, accesses the DNS server IP address information that was stored in local memory 353 in step 430, and returns the DNS server IP address information to DNS forwarder client 362. At step 460, DNS forwarder client 362 receives the DNS server IP address list and installs it, via DNS resolver configuration module 364, in DNS resolver 363. Note that this installation can occur in only the DNS resolver 363 of the secondary processing core sending the DNS server information request in step 440, in the DNS resolvers of all secondary processing cores, or a subset thereof.

At some later time, as represented by step 470, network applications 252 in secondary processing core 150.2 send DNS resolution requests to the operating system's DNS resolver 363 which, in turn, generates DNS queries for conveyance to one or more of the DNS servers whose addresses are listed in the DNS server IP address list installed at step 460. At step 480, the DNS queries are communicated via data link 160 to primary processing core 150.1, which in turn sends them via the WAN interface to the WAN-side DNS server(s) for which the queries are intended. At step 490, the WAN-side DNS server(s) respond to the DNS queries with IP addresses corresponding to the domain names specified in the DNS queries. The DNS resolution results are sent to and received by the primary processing core 150.1, which in turn, at step 495, forwards the results to the secondary core's DNS resolver 363 for use by the requesting network application(s) 252.

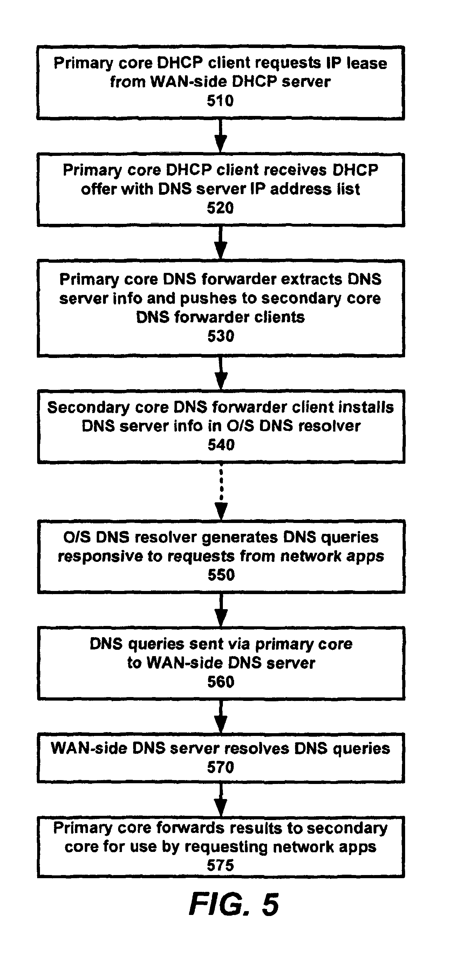

In addition, or alternatively, to the above-described pull mode of operation, the primary core DNS forwarder 352 can "push" updated DNS server information to each secondary core following a primary core DHCP client lease renewal. An exemplary method of operation in push mode will now be described with reference to FIGs. 3 and 5.

As shown in FIG. 5, at step 510, DHCP client 351 sends an IP lease request to a WAN-side DHCP server (210), which, in turn, responds with a DHCP offer message containing a list of IP addresses of DNS servers (such as DNS server 220) that can be used for resolving host domain names. At step 520, DHCP client 351 receives the DHCP offer message with the aforementioned DNS server IP address list and provides the message to DNS forwarder 352. At step 530, DNS forwarder 352 extracts the DNS server IP address list and sends the information via data link 160 to the secondary core DNS forwarder clients, such as DNS forwarder client 362 of processing core 150.2. DNS forwarder 352 can also store the list, such as in local memory 353, for future use such as for provision to secondary cores that have not yet powered up, for instance. At step 540, each secondary core DNS forwarder client (362) installs the DNS server information in its respective DNS resolver (363).

At some later time, as represented by step 550, network applications in secondary processing core 150.2 send DNS resolution requests to the operating system's DNS resolver 363 which, in turn, generates DNS queries for conveyance to one or more of the DNS servers whose addresses are listed in the DNS server IP address list installed at step 540. At step 560, the DNS queries are communicated via data link 160 to primary processing core 150.1, which in turn sends them via the WAN to the DNS server(s) for which the queries are intended. At step 570, the WAN-side DNS server(s) respond to the DNS queries with IP addresses corresponding to the domain names specified in the DNS queries. The DNS resolution results are sent to the primary processing core 150.1, which in turn, at step 575, forwards the results to the secondary core's DNS resolver 363 for use by the requesting network application(s).

In addition to network applications running on the processing cores 150, client devices (such as CPE devices 280) attached to the processing cores 150 via network interfaces 180 may also require DNS resolution services. A client device is considered to be attached to the processing core 150 controlling the network interface 180 by which the client device connects to the platform 100.

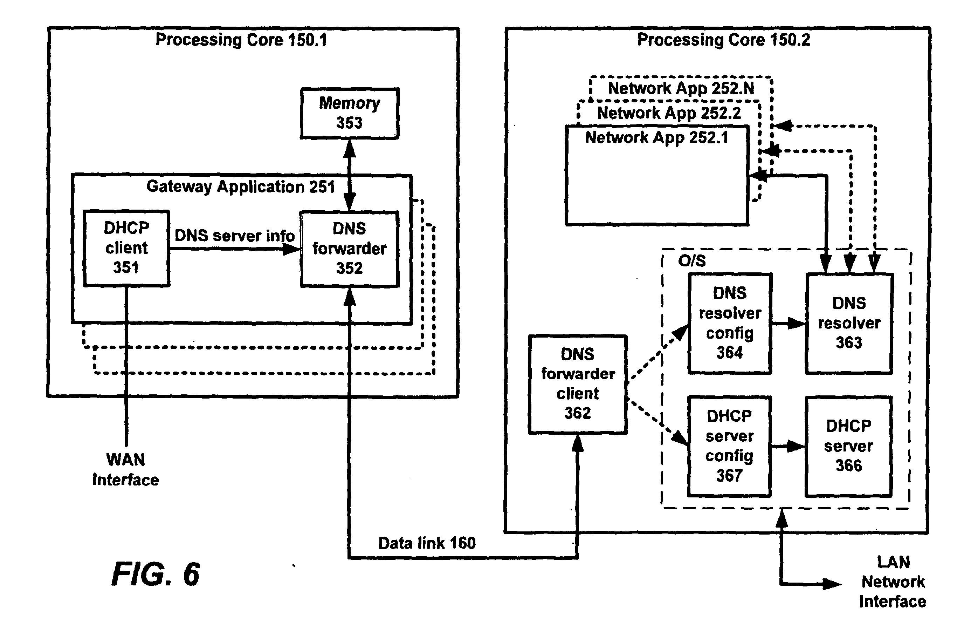

In an exemplary embodiment, attached client devices do not use the DNS resolver 363 of the secondary cores. Rather, attached client devices generate their own DNS queries which gateway 100 passes on to WAN-side DNS server(s). Such an embodiment is shown in FIG. 6.

As shown in FIG. 6, it is contemplated that the operating system network protocol stack of secondary processing core 150.2 includes a DHCP server 366 and a DHCP server configuration module 367. Additionally, attached client devices include DHCP client modules which interact with DHCP server 366 for carrying out DHCP transactions.

In addition to installing the DNS server IP addresses provided by DNS forwarder 352 into DNS resolver 363, as described above, DNS forwarder client 362 also installs the DNS server IP list into DHCP server 366 via DHCP server configuration module 367. Attached client devices obtain, in a conventional manner, LAN IP leases from the secondary core's DHCP server 366. DHCP offer messages from DHCP server 366 to the attached client devices contain the DNS server IP list installed by DNS forwarder client 362 into DHCP server 366. This gives each attached client device the DNS server IP information it needs to generate conventional DNS queries using its operating system's DNS resolver module. The DNS queries thus generated pass conventionally from LAN interface 180 thru the bottom of network protocol stack 262 then across link 160 and out the WAN interface 170 to a WAN-side DNS server.

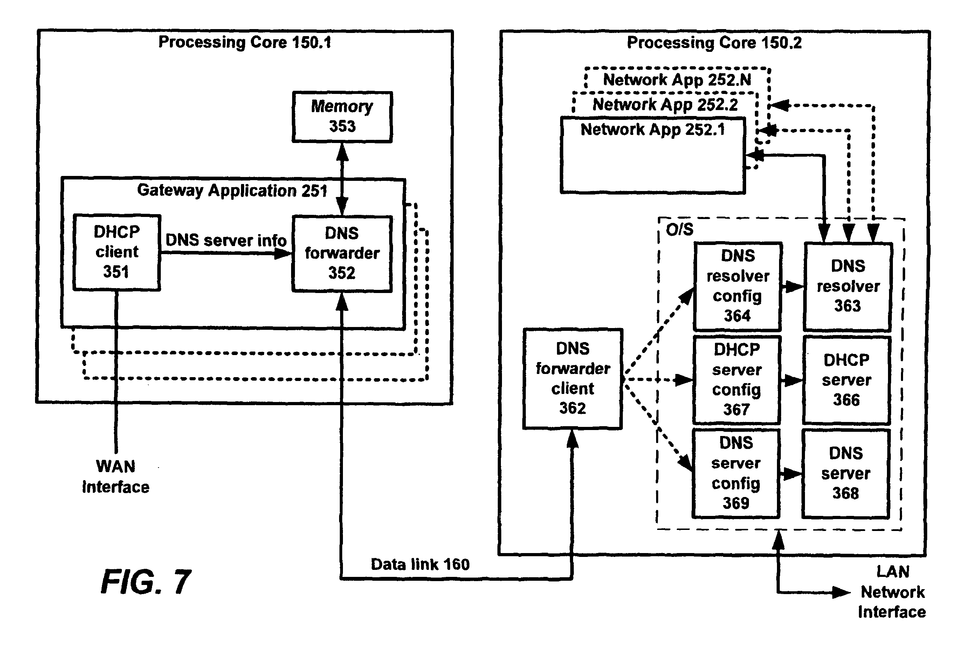

In a further exemplary embodiment, shown in FIG. 7, it is contemplated that the operating system network protocol stack of secondary processing core 150.2 includes a DNS server 368 which attached client devices can use to resolve DNS queries. In such an embodiment, DHCP offer messages sent from DHCP server 366 to the attached client devices include the IP address of the secondary processing core hosting DNS server 368 in the list of DNS server IP addresses. The list of DNS server IP addresses may contain only the IP address of the secondary core, or it may also include the addresses of other DNS servers as well.

It is contemplated that the operating system network protocol stack of secondary processing core 150.2 also includes a DNS server configuration module 369 which DNS forwarder client 362 uses to install into DNS server 368 the DNS server IP list installed into DNS resolver 363 and DHCP server 366, as described above. This allows secondary core DNS server 368 to forward, if need be, DNS queries to the next (WAN-side) DNS server in the hierarchy of DNS servers that may be involved in fully resolving domain names.

It should be noted that in order for a secondary processing core to host a DHCP server 366 and/or a DNS server 368 as described above, the gateway 100 should be operating in a router (as opposed to bridge) mode.

Although exemplary embodiments of the invention have been described using a home gateway with one primary processing core, the present invention can be applied to any multi-core platform in which one or more cores without direct network connectivity obtain DNS resolution services via one or more other cores having direct connectivity to the network(s) on which the DNS servers reside.

In view of the above, the foregoing merely illustrates the principles of the invention and it will thus be appreciated that those skilled in the art will be able to devise numerous alternative arrangements which, although not explicitly described herein, embody the principles of the invention and are within its scope. For example, although illustrated in the context of separate functional elements, these functional elements may be embodied in one, or more, integrated circuits (ICs). Similarly, although shown as separate elements, some or all of the elements may be implemented in a stored-program-controlled processor, e.g., a general purpose processor, which executes associated software, e.g., corresponding to one, or more, steps, which software may be embodied in any of a variety of suitable storage media. It is therefore to be understood that numerous modifications may be made to the illustrative embodiments and that other arrangements may be devised without departing from the spirit and scope of the present invention.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms (for example, a hardware apparatus, hardware and software apparatus, or a computer-readable media). An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device. Processing devices also include communication devices, such as, for example, computers, cell phones, portable/personal digital assistants ("PDAs"), and other devices that facilitate communication of information between end-users.

Additionally, the methods may be implemented by instructions being performed by a processor, and such instructions may be stored on a processor or computer-readable media such as, for example, an integrated circuit, a software carrier or other storage device such as, for example, a hard disk, a compact diskette, a random access memory ("RAM"), a read-only memory ("ROM") or any other magnetic, optical, or solid state media. The instructions may form an application program tangibly embodied on a computer-readable medium such as any of the media listed above. As should be clear, a processor may include, as part of the processor unit, a computer-readable media having, for example, instructions for carrying out a process. The instructions, corresponding to the method of the present invention, when executed, can transform a general purpose computer into a specific machine that performs the methods of the present invention.

## Claims

1. A method of providing Domain Name System, DNS, resolution service in a multi-core platform (100), the method **characterized in that** it comprises:
receiving (420, 520) at a primary processing core (150.1) of the multi-core platform, DNS server information relating to a DNS server;
providing (450, 530) the DNS server information to a secondary processing core (150.2) of the multi-core platform;
generating (470, 550) a DNS query at the secondary processing core (150.2) using the DNS server information; and
sending (480, 560) the DNS query to the DNS server via the primary processing core (150.1).

2. The method of claim 1 comprising sending (440) a request for the DNS server information from the secondary processing core (150.2) to the primary processing core (150.1), wherein the primary processing core (150.1) provides the DNS server information to the secondary processing core (150.2) in response to the request.

3. The method of claim 1 comprising storing (430) the DNS server information at the primary processing core (150.1) and installing (460, 540) the DNS server information in a DNS resolver (363) of the secondary processing core (150.2).

4. The method of claim 1 comprising:
sending (410, 510) an IP lease request from the primary processing core (150.1) to a Dynamic Host Configuration Protocol, DHCP, server, wherein the DHCP server responds to the IP lease request by sending a DHCP offer including the DNS server information.

5. The method of claim 1 comprising:
receiving (490, 570) at the primary processing core (150.1) results of a DNS resolution performed by the DNS server in response to the DNS query; and
providing (495, 575) the results of the DNS resolution to a network application running on the secondary processing core (150.2) to the secondary processing core.

6. The method of claim 1 comprising:
installing the DNS server information in a DHCP server (366) of the secondary processing core (150.2);
sending a DHCP offer including the DNS server information from the DHCP server (366) to a client device attached to the secondary processing core (150.2); and
routing a DNS query from the client device to the DNS server via the primary processing core (150.1).

7. The method of claim 1 comprising:
installing the DNS server information in a secondary core DNS server (368);
receiving a DNS query at the secondary core DNS server (368) from a client device attached to the secondary processing core (150.2); and
routing the DNS query from the secondary core DNS server (368) to the DNS server via the primary processing core (150.1).

8. The method of claim 7 comprising:
installing in a DHCP server (366) of the secondary processing core (150.2) secondary core DNS server information relating to the secondary core DNS server (368); and
sending a DHCP offer including the secondary core DNS server information from the DHCP server (366) to a client device attached to the secondary processing core (150.2).

9. Apparatus for providing Domain Name System, DNS, resolution service in a multi-core platform (100), the apparatus **characterized in that** it comprises:
a DNS forwarder (352) in a primary processing core (150.1) of the multi-core platform; and
a DNS forwarder client (362) in a secondary processing core (150.2) of the multi-core platform,
wherein:
the DNS forwarder (352) receives DNS server information relating to a DNS server and provides the DNS server information to the DNS forwarder client (362),
the DNS forwarder client (362) installs the DNS server information in a DNS resolver (363) of the secondary processing core (150.2), and
the DNS resolver (363) uses the DNS server information to generate a DNS query for sending to the DNS server via the primary processing core (150.1).

10. The apparatus of claim 9, wherein:
the primary processing core (150.1) includes a Dynamic Host Configuration Protocol, DHCP, client (351),
the DHCP client (351) receives the DNS server information from a DHCP server, and
the DHCP client (351) sends the DNS server information to the DNS forwarder (352).

11. The apparatus of claim 9, wherein:
a primary processing core network protocol stack (261) receives results of a DNS resolution performed by the DNS server in response to the DNS query,
the primary processing core network protocol stack (261) sends the results of the DNS resolution to a secondary processing core network protocol stack (262),
the secondary processing core network protocol stack (262) provides the results of the DNS resolution to the DNS resolver (363), and
the DNS resolver (363) provides the results of the DNS resolution to a network application running on the secondary processing core (150.2).

12. The apparatus of claim 9, wherein the multi-core platform (100) includes a virtual or physical data link (160) between the primary processing core (150.1) and the secondary processing core (150.2).

13. The apparatus of claim 9, wherein:
the secondary processing core includes a DHCP server (366);
the DNS forwarder client (362) installs the DNS server information in the DHCP server (366);
the DHCP server (366) sends a DHCP offer including the DNS server information to a client device attached to the secondary processing core (150.2); and
the primary processing core (150.1) routes a DNS query from the client device to the DNS server.

14. The apparatus of claim 9, wherein:
the secondary processing core (150.2) includes a secondary core DNS server (368);
the DNS forwarder client (362) installs the DNS server information in the secondary core DNS server (368);
the secondary core DNS server (368) receives a DNS query from a client device attached to the secondary processing core (150.2); and
the primary processing core (150.1) routes the DNS query from the secondary core DNS server (368) to the DNS server.

15. The apparatus of claim 14, wherein:
the secondary processing core (150.2) includes a DHCP server (366);
secondary core DNS server information relating to the secondary core DNS server (368) is installed in the DHCP server (366); and
the DHCP server (366) sends a DHCP offer including the secondary core DNS server information to a client device attached to the secondary processing core (150.2).

## Patentansprüche

1. Verfahren zum Bereitstellen eines Domain-Name-System-Auf-lösungsdienstes (DNS-Auflösungsdienstes) in einer Mehr-kernplattform (100), wobei das Verfahren **dadurch gekennzeichnet ist, dass** es umfasst:
Empfangen (420, 520) von DNS-Server-Informationen, die sich auf einen DNS-Server beziehen, bei einem primären Verarbeitungskern (150.1) der Mehrkernplattform;
Bereitstellen (450, 530) der DNS-Server-Informationen für einen sekundären Verarbeitungskern (150.2) der Mehrkernplattform;
Erzeugen (470, 550) einer DNS-Abfrage bei dem sekundären Verarbeitungskern (150.2) unter Verwendung der DNS-Server-Informationen; und
Senden (480, 560) der DNS-Abfrage an den DNS-Server über den primären Verarbeitungskern (150.1).

2. Verfahren nach Anspruch 1, das das Senden (440) einer Anforderung für die DNS-Server-Informationen von dem sekundären Verarbeitungskern (150.2) an den primären Verarbeitungskern (150.1) umfasst, wobei der primäre Verarbeitungskern (150.1) die DNS-Server-Informationen als Antwort auf die Anforderung für den sekundären Verarbeitungskern (150.2) bereitstellt.

3. Verfahren nach Anspruch 1, das das Speichern (430) der DNS-Server-Informationen bei dem primären Verarbeitungskern (150.1) und das Installieren (460, 540) der DNS-Server-Informationen in einem DNS-Resolver (363) des sekundären Verarbeitungskerns (150.2) umfasst.

4. Verfahren nach Anspruch 1, das umfasst:
Senden (410, 510) einer IP-Lease-Anforderung von dem primären Verarbeitungskern (150.1) an einen Dynamic-Host-Configuration-Protocol-Server, DHCP-Server, wobei der DHCP-Server durch Senden eines DHCP-Angebots, das die DNS-Server-Informationen enthält, auf die IP-Lease-Anforderung antwortet.

5. Verfahren nach Anspruch 1, das umfasst:
Empfangen (490, 570) von Ergebnissen einer durch den DNS-Server ausgeführten DNS-Auflösung als Antwort auf die DNS-Abfrage bei dem primären Verarbeitungskern (150.1); und
Bereitstellen (495, 575) der Ergebnisse der DNS-Auflösung für eine Netzanwendung, die in dem sekundären Verarbeitungskern (150.2) ausgeführt wird, für den sekundären Verarbeitungskern.

6. Verfahren nach Anspruch 1, das umfasst:
Installieren der DNS-Server-Informationen in einem DHCP-Server (366) des sekundären Verarbeitungskerns (150.2);
Senden eines DHCP-Angebots, das die DNS-Server-Informationen enthält, von dem DHCP-Server (366) an eine an den sekundären Verarbeitungskern (150.2) angeschlossene Client-Vorrichtung; und
Routen einer DNS-Abfrage von der Client-Vorrichtung zu dem DNS-Server über den primären Verarbeitungskern (150.1).

7. Verfahren nach Anspruch 1, das umfasst:
Installieren der DNS-Server-Informationen in einem DNS-Server (368) des sekundären Kerns;
Empfangen einer DNS-Abfrage von einer an den sekundären Verarbeitungskern (150.2) angeschlossenen Client-Vorrichtung bei dem DNS-Server (368) des sekundären Kerns; und
Routen der DNS-Abfrage von dem DNS-Server (368) des sekundären Kerns zu dem DNS-Server über den primären Verarbeitungskern (150.1).

8. Verfahren nach Anspruch 7, das umfasst:
Installieren von DNS-Server-Informationen des sekundären Kerns, die sich auf den DNS-Server (368) des sekundären Kerns beziehen, in einem DHCP-Server (366) des sekundären Verarbeitungskerns (150.2); und
Senden eines DHCP-Angebots, das die DNS-Server-Informationen des sekundären Kerns enthält, von dem DHCP-Server (366) an eine an den sekundären Verarbeitungskern (150.2) angeschlossene Client-Vorrichtung.

9. Vorrichtung zum Bereitstellen eines Domain-Name-System-Auflösungsdienstes, DNS-Auflösungsdienstes, in einer Mehrkernplattform (100), wobei die Vorrichtung **dadurch gekennzeichnet ist, dass** sie umfasst:
einen DNS-Forwarder (352) in einem primären Verarbeitungskern (150.1) der Mehrkernplattform; und
einen DNS-Forwarder-Client (362) in einem sekundären Verarbeitungskern (150.2) der Mehrkernplattform,
wobei:
der DNS-Forwarder (352) DNS-Server-Informationen empfängt, die sich auf einen DNS-Server beziehen, und
die DNS-Server-Informationen für den DNS-Forwarder-Client (362) bereitstellt,
der DNS-Forwarder-Client (362) die DNS-Server-Informationen in einem DNS-Resolver (363) des sekundären Verarbeitungskerns (150.2) installiert, und
der DNS-Resolver (363) die DNS-Server-Informationen zum Erzeugen einer DNS-Abfrage, um sie über den primären Verarbeitungskern (150.1) an den DNS-Server zu senden, verwendet.

10. Vorrichtung nach Anspruch 9, wobei:
der primäre Verarbeitungskern (150.1) einen Dynamic-Host-Configuration-Protocol-Client, DHCP-Client, (351) enthält,
der DHCP-Client (351) die DNS-Server-Informationen von einem DHCP-Server empfängt, und
der DHCP-Client (351) die DNS-Server-Informationen an den DNS-Forwarder (352) sendet.

11. Vorrichtung nach Anspruch 9, wobei:
ein Netzprotokollstapel (261) des primären Verarbeitungskerns Ergebnisse einer durch den DNS-Server als Antwort auf die DNS-Abfrage ausgeführten DNS-Auflösung empfängt,
der Netzprotokollstapel (261) des primären Verarbeitungskerns die Ergebnisse der DNS-Auflösung an einen Netzprotokollstapel (262) eines sekundären Verarbeitungskerns sendet,
der Netzprotokollstapel (262) des sekundären Verarbeitungskerns die Ergebnisse der DNS-Auflösung für den DNS-Resolver (363) bereitstellt, und
der DNS-Resolver (363) die Ergebnisse der DNS-Auflösung für eine in dem sekundären Verarbeitungskern (150.2) ausgeführte Netzanwendung bereitstellt.

12. Vorrichtung nach Anspruch 9, wobei die Mehrkernplattform (100) zwischen dem primären Verarbeitungskern (150.1) und dem sekundären Verarbeitungskern (150.2) eine virtuelle oder eine physikalische Datenverbindung (160) enthält.

13. Vorrichtung nach Anspruch 9, wobei:
der sekundäre Verarbeitungskern einen DHCP-Server (366) enthält;
der DNS-Forwarder-Client (362) die DNS-Server-Informationen in dem DHCP-Server (366) installiert;
der DHCP-Server (366) ein DHCP-Angebot, das die DNS-Server-Informationen enthält, an eine an den sekundären Verarbeitungskern (150.2) angeschlossene Client-Vorrichtung sendet; und
der primäre Verarbeitungskern (150.1) eine DNS-Abfrage von der Client-Vorrichtung zu dem DNS-Server routet.

14. Vorrichtung nach Anspruch 9, wobei:
der sekundäre Verarbeitungskern (150.2) einen DNS-Server (368) des sekundären Kerns enthält;
der DNS-Forwarder-Client (362) die DNS-Server-Informationen in dem DNS-Server (368) des sekundären Kerns installiert;
der DNS-Server (368) des sekundären Kerns eine DNS-Ab-frage von einer an den sekundären Verarbeitungskern (150.2) angeschlossenen Client-Vorrichtung empfängt; und der primäre Verarbeitungskern (150.1) die DNS-Abfrage von dem DNS-Server (368) des sekundären Kerns zu dem DNS-Server routet.

15. Vorrichtung nach Anspruch 14, wobei:
der sekundäre Verarbeitungskern (150.2) einen DHCP-Server (366) enthält;
die DNS-Server-Informationen des sekundären Kerns, die sich auf den DNS-Server (368) des sekundären Kerns beziehen, in dem DHCP-Server (366) installiert werden; und
der DHCP-Server (366) ein DHCP-Angebot, das die DNS-Server-Informationen des sekundären Kerns enthält, an eine an den sekundären Verarbeitungskern (150.2) angeschlossene Client-Vorrichtung sendet.

## Revendications

1. Un procédé pour fournir un service de résolution de système de nom de domaine, DNS dans une plateforme multicoeur (100), le procédé **caractérisé en ce qu'**il comprend :
la réception (420, 520) au niveau d'un coeur de processeur primaire (150.1) de la plateforme multicoeur, d'informations de serveur DNS concernant un serveur DNS;
la fourniture (450, 530) des informations de serveur DNS à un coeur de processeur secondaire (150.2) de la plateforme multicoeur ;
la génération (470, 550) d'une requête DNS au niveau du coeur de processeur secondaire (150.2) à l'aide des informations de serveur DNS ; et
l'envoi (480, 560) de la requête DNS au serveur DNS via le coeur de processeur primaire (150.1).

2. Le procédé de la revendication 1, comprenant l'envoi (440) d'une requête pour les informations de serveur DNS à partir du coeur de processeur secondaire (150.2) vers le coeur de processeur primaire (150.1), dans lequel le coeur de processeur primaire (150.1) fournit les informations de serveur DNS au coeur de processeur secondaire (150.2) en réponse à la requête.

3. Le procédé de la revendication 1, comprenant le stockage (430) des informations de serveur DNS au niveau du coeur de processeur primaire (150.1) et l'installation (460, 540) des informations de serveur DNS dans un résolveur DNS (363) du coeur de processeur secondaire (150.2).

4. Le procédé de la revendication 1, comprenant :
l'envoi (410, 510) d'une requête de bail IP à partir du coeur de processeur primaire (150.1) vers un serveur de protocole de configuration dynamique d'hôte, DHCP, dans lequel le serveur DHCP répond à la requête de bail IP en envoyant une offre DHCP comprenant les informations de serveur DNS.

5. Le procédé de la revendication 1, comprenant :
la réception (490, 570) au niveau du coeur de processeur primaire (150.1) des résultats d'une résolution DNS effectuée par le serveur DNS en réponse à la requête DNS ; et
la fourniture (495, 575) des résultats de la résolution DNS à une application de réseau fonctionnant sur le coeur de processeur secondaire (150.2) au coeur de processeur secondaire.

6. Le procédé de la revendication 1, comprenant :
l'installation des informations de serveur DNS dans un serveur DHCP (366) du coeur de processeur secondaire (150.2) ;
l'envoi d'une offre DHCP comprenant les informations de serveur DNS en provenance du serveur DHCP (366) vers un dispositif client rattaché au coeur de processeur secondaire (150.2) ; et
l'acheminement d'une requête DNS à partir du dispositif client vers le serveur DNS via le coeur de processeur primaire (150.1).

7. Le procédé selon la revendication 1, comprenant :
l'installation des informations de serveur DNS dans un serveur DNS à coeur secondaire (368) ;
la réception d'une requête DNS au niveau du serveur DNS à coeur secondaire (368) à partir d'un dispositif client rattaché au coeur de processeur secondaire (150.2) ; et
l'acheminement de la requête DNS à partir du serveur DNS à coeur secondaire (368) vers le serveur DNS via le coeur de processeur primaire (150.1).

8. Le procédé selon la revendication 7, comprenant :
l'installation dans un serveur DHCP (366) des informations de serveur DNS à coeur secondaire du second coeur de processeur secondaire (150.2) en rapport au serveur DNS à coeur secondaire (368) ; et
l'envoi d'une offre DHCP comprenant les informations de serveur DNS à coeur secondaire en provenance du serveur DHCP (366) vers un dispositif client rattaché au coeur de processeur secondaire (150.2).

9. Appareil pour fournir un service de résolution de système de nom de domaine, DNS dans une plateforme multicoeur (100), l'appareil étant **caractérisé en ce qu'**il comprend :
un redirecteur DNS (352) dans un coeur de processeur primaire (150.1) de la plateforme multicoeur ; et
un client du redirecteur DNS (362) dans un coeur de processeur secondaire (150.2) de la plateforme multicoeur,
où :
le redirecteur DNS (352) reçoit les informations de serveur DNS concernant un serveur DNS et fournit les informations de serveur DNS au client du redirecteur DNS (362),
le client du redirecteur DNS (362) installe les informations de serveur DNS dans un résolveur (363) du coeur de processeur secondaire (150.2), et
le résolveur DNS (363) utilise les informations de serveur DNS afin de générer une requête de DNS pour envoi au serveur DNS via le coeur de processeur primaire (150.1).

10. L'appareil de la revendication 9, dans lequel :
le coeur de processeur primaire (150.1) comprend un client de protocole de configuration dynamique d'hôte, DHCP (351),
le client DHCP (351) reçoit les informations de serveur DNS en provenance d'un serveur DHCP, et
le client DHCP (351) envoie les informations de serveur DNS au redirecteur DNS (352).

11. L'appareil de la revendication 9, dans lequel :
une pile de protocole de réseau d'un coeur de processeur primaire (261) reçoit les résultats d'une résolution DNS effectuée par le serveur DNS en réponse à la requête DNS,
la pile de protocole de réseau d'un coeur de processeur primaire (261) envoie les résultats de la résolution DNS à une pile de protocole de réseau d'un coeur de processeur secondaire (262),
la pile de protocole de réseau d'un coeur de processeur secondaire (262) fournit les résultats de la résolution DNS au résolveur DNS (363), et
le résolveur DNS (363) fournit les résultats de la résolution DNS à une application de réseau fonctionnant sur le coeur de processeur secondaire (150.2).

12. L'appareil de la revendication 9, dans lequel la plateforme multicoeur (100) comprend un lien de données virtuel ou physique (160) entre le coeur de processeur primaire (150.1) et le coeur de processeur secondaire (150.2).

13. L'appareil selon la revendication 9, dans lequel :
le coeur de processeur secondaire comprend un serveur DHCP (366) ;
le client du redirecteur DNS (362) installe les informations de serveur DNS dans le serveur DHCP (366) ;
le serveur DHCP (366) envoie une offre DHCP comprenant les informations de serveur DNS à un dispositif client rattaché au coeur de processeur secondaire (150.2) ; et
le coeur de processeur primaire (150.1) achemine une requête DNS à partir du dispositif client vers le serveur DNS.

14. L'appareil de la revendication 9, dans lequel :
le coeur de processeur secondaire (150.2) comprend un serveur de coeur DNS secondaire (368) ;
le client du redirecteur DNS (362) installe les informations du serveur DNS dans le serveur DNS à coeur secondaire (368) ;
le serveur DNS à coeur secondaire (368) reçoit une requête DNS en provenance d'un dispositif client rattaché au coeur de processeur secondaire (150.2) ; et
le coeur de processeur primaire (150.1) achemine la requête DNS à partir du serveur DNS à coeur secondaire (368) vers le serveur DNS.

15. L'appareil de la revendication 14, dans lequel :
le coeur de processeur secondaire (150.2) comprend un serveur DHCP (366) ; des informations de serveur DNS de coeur secondaire en rapport au serveur DNS à coeur secondaire (368) sont installées dans le serveur DHCP (366) ; et
le serveur DHCP (366) envoie une offre DHCP comprenant les informations de serveur DNS à coeur secondaire à un dispositif client rattaché au coeur de processeur secondaire (150.2).
